# EUROPEAN PATENT APPLICATION

(11) **EP 4 312 315 A1**
(43) Date of publication of application: **31.01.2024**
(21) Application number: 22189888.5
(22) Date of filing: 11.08.2022
(51) Int. Cl.: H01R 12/71, H02S 40/30, H01R 12/57, H01R 12/75, H01R 13/52, H01R 101/00

(54) **CONNECTOR FOR PHOTOVOLTAIC PANEL IN A VEHICLE**

(30) Priority: 25.07.2022 DE 202022104207 U
(71) Applicant: Sono Motors GmbH, 80935 München (DE)
(72) Inventor: HECKER, Carsten, 85560 Ebersberg (DE); SPYRA, Tim, 82069 Hohenschäftlarn (DE); RAMAKRISHNAN, Arun, 78467 Konstanz (DE); KAPP, Camillo, 80992 Munich (DE)
(74) Representative: Qip Patentanwälte Dr. Kuehn & Partner mbB

(57) **Abstract**

The present disclosure relates to a connector (100) for electrically connecting a photovoltaic, PV, panel and a wiring in a vehicle, wherein the connector (100) comprises a housing (102) and a conductor (134). The housing (102) comprises a contact part (106) and a connection part (112). The conductor (104) comprises at least one tab (134) configured for being connected, in particular by soldering or welding, to an electrical contact point at a contact area of the PV panel.

## Description

### FIELD OF THE INVENTION

The present invention relates to a connector for a photovoltaic panel in a vehicle, and more specifically to a connector for connecting a photovoltaic vehicle body panel to a wiring harness in a vehicle, and a photovoltaic vehicle body panel equipped with such connector.

### TECHNICAL BACKGROUND

A photovoltaic arrangement, sometimes referred to as "photovoltaics" or "PV" herein for short, may comprise only one solar cell, but may typically comprise a multiplicity of photovoltaic cells, wherein the or each photovoltaic cell is configured for converting incident or impinging light into electrical energy. One or more photovoltaic cells may be arranged in one or more photovoltaic panels or modules.

Such photovoltaics may also be arranged at a vehicle, for example a vehicle body. More specifically, PV panels may be arranged on or within or form various parts of the vehicle body including roof, side parts, etc. While the term "vehicle body panels" may refer to panels which may be included in a body of any kind of vehicles such as cars, trucks, busses, mobile homes, trains, ships, airplanes, etc., sometimes herein reference may only be made to "car body panels" for sake of conciseness.

Electricity provided by a PV body panel may, e.g., be used for charging a battery of an electric car. A connector is required to provide an electrical connection of the panel to a wiring of the car. Connectors for connecting stationary PV panels, such as panel boxes, connection boxes or junction boxes may be arranged on an edge or a rear side of a panel. For example, a base plate or frame of the box may be glued with its entire footprint onto a rear side surface of the planar PV panel.

Connectors for use in a wiring harness of a vehicle may have to meet specific requirements. For example, typical such requirements in an automotive environment may include durability in view of vibrations, accelerations, decelerations, etc. According to one approach, electrical components may be mechanically and electrically connected by screws. However, vibrations may tend to nevertheless loosen the screws, so inspections may at least be required and the connector needs to be constructed to allow that, with according drawbacks regarding other requirements such as long-term protection against ingress of water, moisture, etc.

Moreover, car body panels are generally not planar but have curved surfaces. In order that a connector can be of general use for differently curved panels, such connector should have a small footprint or base area. However, for conventional connector boxes, such requirement generally contradicts with a reliable, long-lasting mounting of the connector on the panel.

### SUMMARY

There is a need for an improved connector for a photovoltaic panel which meets the requirements for connectors in an automotive environment. Further there is a need for a photovoltaic vehicle body panel equipped with such a connector.

Such need is satisfied by the subject-matter of the independent claims. Further advantageous embodiments are defined in the dependent claims, described in the following specification and illustrated in the accompanying figures.

According to a first aspect of the present invention, a connector for electrically connecting a photovoltaic, PV, panel and a wiring in a vehicle is proposed. The connector comprises a housing and a conductor. The housing comprises a contact part and a connection part. The contact part is configured for contacting a contact area at the PV panel. The connection part is configured for connecting to a connector of the wiring. The contact part and the connection part are arranged at an angle. The connection part is configured for being oriented essentially in parallel to the PV panel. The conductor is configured for providing an electrical connection via contact part and connection part. The conductor comprises at least one tab configured for being connected, for example, by soldering or welding, clamping, i.e., clamp-contacting, clipping, pressure-contacting or the like to an electrical contact point at the contact area of the PV panel.

According to embodiments, the angle between contact part and connection part can be less than 180° (degrees, where 360° is a round angle), preferably less than 135°, more preferably less than 120°, still more preferably less than 110°. More specifically, the angle can be measured between a main axis of the contact portion and a main axis of the connection portion. According to exemplary embodiments, the angle can preferably be 90° with a tolerance of 10° or less, preferably 5° or less.

Further, the definition that the connection part is configured for being oriented "essentially in parallel" to the PV panel is to be understood as comprising that after a mounting process the connection part is connected to a connector of the vehicle wiring such that a main axis of the connecting part is in parallel to a surface of the PV panel, such as a back surface, at the contact area, with a tolerance of 20° or less, preferably 10° or less, more preferably 5° or less.

According to embodiments, the contact part and the connection part are laterally offset with respect to the PV panel. For example, projections of the contact part and the connection part onto the PV panel along the main axis of the contact part are laterally offset from each other. For example, geometric centres of each of the projections are offset from each other. According to one exemplary embodiment, the projections may only partially overlap, for example may not overlap at all, but may be adjacent to each other.

According to some embodiments, only the contact part is configured for mechanically and electrically contacting the PV panel, and the connection part is configured to be spaced apart from the PV panel. For example, the connection part can be arranged or joined to extend laterally from the contact part such as to be offset, i.e., spaced apart from the PV panel when the contact part is mounted to the contact area of the PV panel.

According to some embodiments, the contact part comprises a fastening portion which is configured for fastening the connector to the PV panel. For example, the fastening portion can comprise a socket, base plate or frame configured for being fastened to the contact area of the PV panel by one or more of gluing, welding, such as ultrasonic welding, molding, clipping, etc. The socket can comprise a through-hole through which the tab can be soldered or welded to the contact point of the PV panel.

The tab can be configured for being soldered, welded or otherwise be electrically connected directly to an electrical contact provided as the contact point of the PV panel. It is to be noted that a screwing connection is not intended to be excluded. Any technique of providing an electrical connection between the tab and the electrical contact can be contemplated and this includes any such technique to be developed in the future.

The electrical contact may be provided by any kind of conducting sheet or stripe in the PV panel, such as a copper sheet or a printed circuit board. Specifically, the contact point may be provided by a photovoltaic label, PVL, of the PV panel.

The connector can further comprise a closure for closing the through-hole. The closure can comprise a potting material for filling the through-hole after connecting the tab to the contact point. Additionally or alternatively the closure can comprise a cover or cap such as a closing cap, sealing cap, protection cap, etc. For example, the contact part, a closure and/or a cover can be provided for sealing and protecting the blank electrical contact point of the PV panel. In embodiments, the cover can comprise a pre-assembled sealing. The protection cover can be made of one or more polymer materials.

The contact part can comprise one or more positioning portions for facilitating a desired positioning of the connector during fastening. For example, one or more notches and/or compliant pins may be provided. Additionally or alternatively, a peripheral line or contour of a base plate or socket configured for contacting the contact area may correspond to a structure at the PV panel such as a frame or other guiding or positioning structure.

The housing can be manufactured by molding, for example injection molding. The housing can comprise a polymer material, for example a thermoplastic material. For example, the thermoplastic material can be selected to be able to thermally fuse with material of the PV panel, for example material of a PV label of the panel such as a thermoplastic or thermosetting polymer.

The conductor can be integrated within the housing. For example, the metal tab can be pre-assembled and overmolded within the housing.

According to a second aspect of the invention, a photovoltaic, PV, panel, equipped with a connector according to the first aspect is proposed. According to embodiments, the PV panel can have a curved surface. For example, the PV panel can be a PV vehicle body panel.

A PCB in the PV panel can provide a contact point/s for the at least one tab of the connector.

The PV panel can comprise one or more positioning portions for positioning the contact part. The positioning portion can comprise, for example, one or more pins and/or frames.

### BRIEF DESCRIPTION OF THE DRAWINGS

In the following, advantageous embodiments of the invention will be described with reference to the enclosed drawings. However, neither the drawings nor the description shall be interpreted as limiting the invention.
Fig. 1A is a perspective view of a connector according to a first embodiment.
Fig. 1B is another perspective view of the connector of Fig. 1A.
Fig. 2 is a cross-section of the connector of Figs. 1A, 1B mounted on a PV panel.
Fig. 3A is a perspective view on a connector according to a second embodiment.
Fig. 3B is a perspective view on a connector on a PV panel according to a third embodiment.
Fig. 4 is a view from above on a connector according to a fourth embodiment.
Fig. 5A a perspective view on a connector mounted on a PV panel according to a fifth embodiment.
Fig. 5B is another perspective view on the connector according to the fifth embodiment.
Fig. 6 is a perspective view onto a connector according to a sixth embodiment.
Fig. 7 is a perspective view onto a connector according to a seventh embodiment. The figures are only schematic and not to scale.

### DESCRIPTION OF PREFERRED EMBODIMENTS

It should be noted that any of the terms "comprising" or "including" as used herein does not exclude other elements or steps. Use of "a" or "an" does not exclude multiple or a plurality.

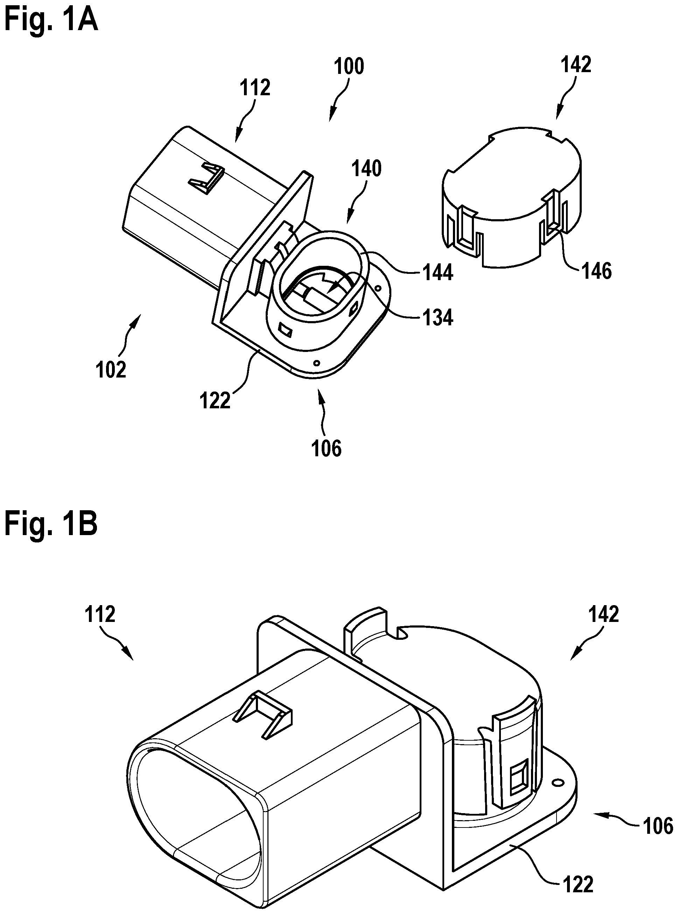

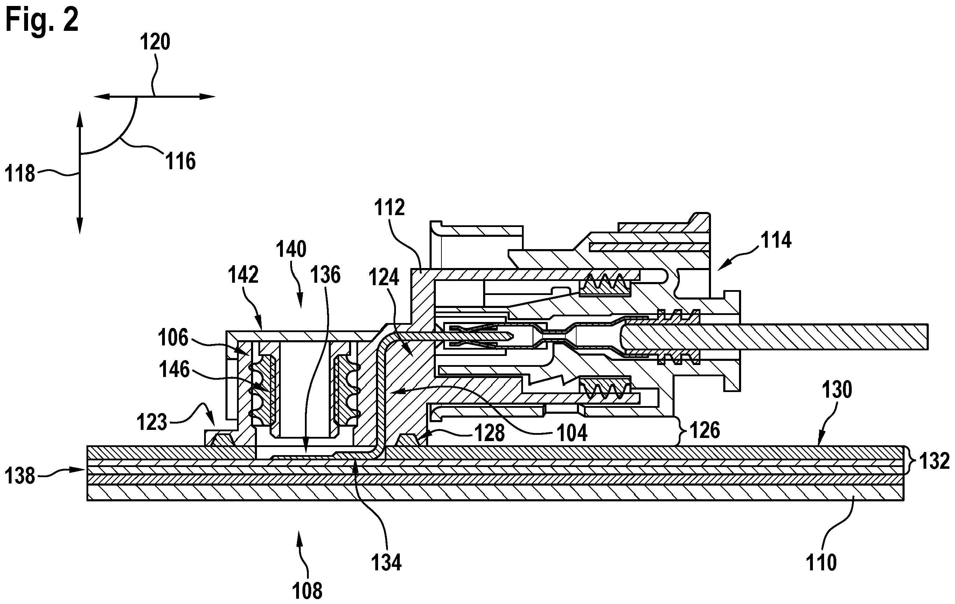

Figs. 1A, 1B and 2 illustrate a header or connector 100 according to an embodiment of the present disclosure. The connector 100 comprises a housing 102 and a conductor 104. The housing 102 comprises a contact part 106 which is configured for contacting a contact area 108 at a PV car body panel 110, as discussed in detail further below. The housing 102 further comprises a connection part 112 configured for connecting to a connector 114 of a wiring harness of a car. According to automotive manufacturing processes, a pluggable connection may be required, e.g., for short cycle times in a production line. The wiring harness may provide a standard connector 114 as illustrated in Fig. 2. The female/male connector or plug 114 mates with the male/female connector or plug formed by the connection part 112 on the PV car body panel 110 side.

As also shown in Fig. 2, the contact part 106 and connection part 112 are arranged at an angle 116 of 90°. The angle 116 is measured between a main axis 118 of the contact part 106 and a main axis 120 of the connection part 112. The main axes or main directions 118 and 120 can be understood as follows: The conductor 104 extends from a contact point 136 at the PV panel 110 towards the automotive connector 114. The contact point 136 is defined by a blank surface of the PV panel 110, such as a blank surface of a copper sheet or other conductor of the panel, onto which a tab 134 of conductor 104 is soldered or welded. The direction indicated by the term "onto which" defines the main direction or main axis 118 of the contact part 106.

According to various embodiments, the panel 110 surface at the contact point 136 can be (locally) flat, and/or the tab 134 to be soldered or welded to the contact point 136 can be a flat or flattened stripe. Consequently, the main axis 118 can also be understood as being perpendicular to the flat panel surface at the contact point 136 and/or of the tab 134. Moreover, the main axis or direction 118 can also be understood as the direction of a soldering or welding pin which operates vertically from above, referring to the PV panel 110 surface, for soldering or welding the tab 134 to the contact point 136.

It is noted that the skilled person can readily apply any of the above definitions of the main direction 118 of the contact part also in a case where one or more of the contact point 136 and the tab 134 are not strictly flat at the point of soldering or welding, e.g., because one or both of contact point 136 and tab 134 form soldering bumps.

Further it is noted that embodiments of the contact part may have structural features such as at least one through-hole formed to enable soldering or welding the at least one tab to the PV panel, or a protrusion or protrusions formed for supporting a protective cover for the through-hole, where according embodiments are described hereinbelow, and any such structures may have main extensions which are not oriented strictly perpendicular to the PV panel surface at the contact area. Nevertheless, also for such embodiments of a connector, a main axis or direction of the contact part can readily be considered the direction "onto which" the conducting tab of the contact part is soldered or welded to the blank contact point of the PV panel.

The main axis or main direction 120 of connection part 112 can be understood as indicating a direction of connecting the connection part 112 with standard automotive connector 114. Specifically, the connection between connection part 112 and connector 114 may be a pluggable connection and the direction 120 is the direction of plugging. It is noted that the plugging direction is independent of whether the connector 114 is in itself a straight or an angled connector.

Moreover, in the exemplary embodiment as illustrated in Fig. 2, the conductor 104 extends along the main direction 120 when transitioning straight from contact part 106 via a joining portion 124 towards connection part 112. It is however to be noted that alternative constructions of the conductor can be contemplated with regard to one and the same plugging direction 120, e.g., the conductor may extend vertically (with reference to the PV plane surface) into the connection part and may comprise a bendable stripe for pressing contact with the mating connector when plugged in.

While contact part 106 and connection part 112 can be said to be angled "to each other", a complementary definition of main directions of the parts 106 and 112 may refer to a surface of a PV panel to which the connector 100 is to be mounted to. Specifically, the surface of the PV panel 110 at the contact point 136 or contact area 108 may be assumed to be flat at the contact area 108 despite the PV body panel 110 being generally not flat but having a curved surface.

Generally, the connector 100 may be understood as implementing a 'socket' or 'header' of the PV panel 110 for electrical connection to a car wiring and a reference direction for such socket may be the direction perpendicular to the PV panel surface where the socket is located, similar to a wall socket where a reference direction thereof may typically be understood as being perpendicular to the wall, specifically a local wall surface.

The main direction 118 of the contact part 106 can be understood as being identical to said reference direction. The main or plugging direction 120 of the connection part 112 can deviate from said reference direction. In still other words, the connection part 112 is angled with reference to an axis extending vertically from the PV plane surface, such that the connector 114 is not to be plugged-in vertically from above (with reference to the PV panel 110) but laterally or from the side. Consequently, instead of defining that contact part and connection part are angled "to each other", it can also be defined that the connection part is angled, by an angle different from 0° or 180°, with respect to the reference direction or "vertical" direction with regard to the local PV plane surface, where the surface may be the surface of a back side of the PV panel 110, e.g., the surface of a back-sheet of a PV label at the contact area.

Still other convention can be contemplated where an angle is not indicating a deviation of the main direction of the connection part from a vertical direction, but from a horizontal direction, i.e., a direction parallel to the local PV panel surface, and such angle would be 0° in the example embodiment of Fig. 2.

Accordingly, the connection part 112 is configured for being oriented essentially in parallel to the PV panel 110, i.e., the main direction 120 of connection part 112 is parallel to the plane of the PV panel 110 at the contact area 108. The term "essentially" can be understood as referring to tolerances of manufacturing the connector 100, and in particular to tolerances of mounting the connector 100 to the PV panel 110.

According to other embodiments, though, there may be an intention that angle 116 between contact part and connection part 112 deviates from 90° (and/or that an angle between main axis 120 of the connection part and a local plane of the PV panel deviates from 0°). For example, the intended angle may be 110°, or 120°, or 135°. Such angles may be intended for reasons of manufacturing, such as regarding a mounting of the connector to the PV panel, connecting the connecting part with a standard automotive connector, etc. As such modifications are common to the skilled person, it is therefore contemplated that these be also comprised by the above term "oriented essentially in parallel".

With continuing reference to Figs. 1A, 1B and 2, the contact part 106 and the connection part 112 are laterally offset from each other. More specifically, with respect to PV panel 110, a projection, along axis 118, of contact part 106 onto a surface of the PV panel 110 at the contact area 108 and a projection of the connection part 112 onto the surface of the PV panel 110 at or near to the contact area 108 are shifted from each other with respect to centre points thereof. As is readily clear for the present embodiment, the projection of the connection part 112 onto the surface of the PV panel 110 is outside the contact area 108 but is directly adjacent thereto. Specifically, connection part 112 can be understood as being laterally joined to contact part 106 by a joining portion 124 of connector 100.

It is to be understood that the lateral offset of connection part 112 from contact part 106 would enable the connection part 112 to also have a footprint on the PV panel 110 by means of a socket or base plate, similar to the contact part having socket 122 for contacting the PV panel 110. Instead, as best seen in Fig. 2, the connection part 112 is configured to be spaced apart by a distance 126 from the PV panel 110 in a mounted state of the connector 100.

It is noted in this respect that for ease of understanding the PV panel is illustrated as flat in Fig. 2, while in general the or any PV body panel will be curved, and therefore the requirement that the connection part 112 being spaced apart from the PV panel needs to take into account the curvatures of the PV body panels which are to be equipped with the connector. Parameters to meet said requirement include distance 126 but also the angle 116, i.e., an angle between contact part and connection part larger than 90° may contribute to broadening the range of applicability of the connector. Specifically, a connector may be designed to be applicable for a plurality of curved surface panels, for example, for at least a subset of PV car body panels of a specific car or series of cars, etc.

Referring back to Figs. 1A, 1B and 2, the contact part 106 comprises the socket 122 as a fastening portion for fastening the connector 100 to the PV panel 110. For example, the socket 122 may be fastened with glue 128 to a backsheet 130 of PV panel 110. According to one example, the PV panel 110 may comprise a photovoltaic label PVL 132 comprising backsheet 130 in the form of, e.g., a polymeric foil.

The conductor 104 comprises as an electrically conducting element a tab 134 which can be a flattened metal tab or strip, for example. The tab 134 is configured for being connected to an electrical contact point 136 at the contact area 108 of the PV panel 110. For example, the PVL 132 may comprise a copper sheet 138 exposed at the contact area 108 and thereby defining the blank copper contact point 136. Accordingly, the tab 134 can be configured for being soldered (any type of soldering) or welded directly to the contact point 136 to thereby provide an electrical connection between tab 134 and copper sheet 138.

It is generally noted that provisioning of an electrical connection, such as between tab 134 and copper sheet 138 in the example embodiment of Fig. 1, can be accomplished by one or more, i.e., combinations of, measures such as joining, pressing, tensioning, welding, soldering, etc. together, tensing together, clamping, i.e., clamp-contacting, pressure-contacting, soldering, welding (any kind of welding), or the like. According to various embodiments, in an automotive environment regarding manufacturing and/or use of PV panel 110 with attached connector 100, mechanical and/or electrical connection of tab and copper sheet may preferably be provided by soldering and/or welding, which does however not exclude any kind of additional or supplemental, e.g., provisional or pre-fixing realized by, for example, clipping, clamping, tensioning, etc.

The conductor 104 provides an electrical connection via contact part 106 and connection part 112. According to one embodiment, the conductor can be a single piece of metal including the tab 134 and can be integrated within the housing 102. Specifically, the conductor 104 can extend from contact part 106 via joining portion 124 to connection part 112. For example, the conductor 104 may be bent or curved according to the angled arrangement of contact part 106 and connection part 112, the lateral offset thereof, the distance or offset 126 of the connection part 112 from the PV panel surface, etc. Within connection part 112, the conductor 104 may be configured for making an electrical connection when connection part 112 mates with automotive connector 114.

As best seen in Figs. 1A and 2, the contact part 106 comprises a through-hole 140 which is provided to enable that metal tab 134 is soldered or welded to the electrical contact point 136 of the PV panel 110 when connector 100 is accordingly positioned on the PV panel 110, i.e., contact part 106 is in contact with contact area 108. It is noted that fastening of the contact part 106 to contact area 108 may be accomplished prior to or after the soldering or welding of the tab 134 to contact point 136.

The connector 100 comprises a protection cap or cover 142 for closing the though-hole 140 of the contact part 106 after the tab 134 is electrically connected to the PV panel 110. The contact part 106 comprises a protrusion 144 over which to put the protection cap 142, to thereby close the through-hole 140 such that one or more of the functions of protecting / sealing the blank contact point 136 and/or tab 134 from humidity, water, dust, corrosion, abrasion, mechanical impact any other kind of aging, etc. is achieved. According to embodiments, protrusion 144 may comprise a hollow shaft, stub, collar, fragments thereof, etc.

The protection cap 142 can be of any material, preferably polymer. The protection cap 142 can be configured removable, which allows servicing of the soldering / welding point 136. Moreover, the protection cap 142 may be added a sealing material 146 for achieving one or more of the aforementioned functions. The protection cap 142 can include the pre-assembled sealing 146. Additionally or alternatively, a potting material can be provided prior to closing the through-hole 140 with the protection cap 142. According to still another alternative, only one or more potting materials are provided for protective closure, and the protrusion 144 is configured for accepting the potting material/s. Also, according to a further embodiment, it is also possible to glue or weld the protection cover 142 onto the circumferential wall of the protrusion 144 wherein for this embodiment, an additional sealing may be omitted.

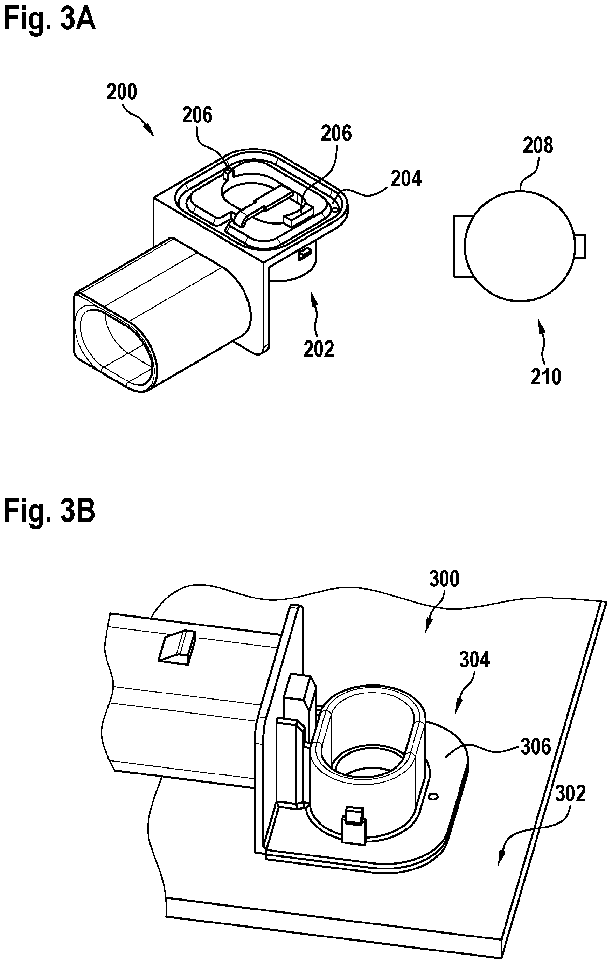

Fig. 3A illustrates a further embodiment of a connector 200 according to the present disclosure. Connector 200 is similar to connector 100 except for the following additional features which implement a poka-yoke mechanism for mounting the connector 200 to a PV panel. Contact part 202 of connector 200 comprises positioning portions for correct positioning of the contact part 202 on a PV panel. Specifically, socket 204 of contact part 202 can comprise compliant pins 206 (resp. notches) for mating with complementary notches (resp. pins) on the PV panel. A corresponding poka-yoke hole 208 is also illustrated.

Pins 206 can be used to facilitate placement of the contact part 202 on a PV contact area 210 during mounting. As a specific example, the pins 206 / notches can be used to facilitate an orientation of the connector on the panel during mounting. According to the embodiment of Fig. 3A, the pins 206 are of different shapes and therefore the header can be assembled only in one direction.

Fig. 3B illustrates another embodiment of a connector 300 according to the present disclosure. Connector 300 may be similar to connector 100. Additional features implement an alternative poka-yoke mechanism. In this example, PV panel 302 comprises one or more positioning portions for facilitating a correct positioning of a contact part 304 of connector 300. Specifically, a frame 306 is provided on the PV panel 302. According to a specific example, the frame 306 can be molded onto a back-sheet of the PV module 302 around a contact area provided for contact with contact part 304.

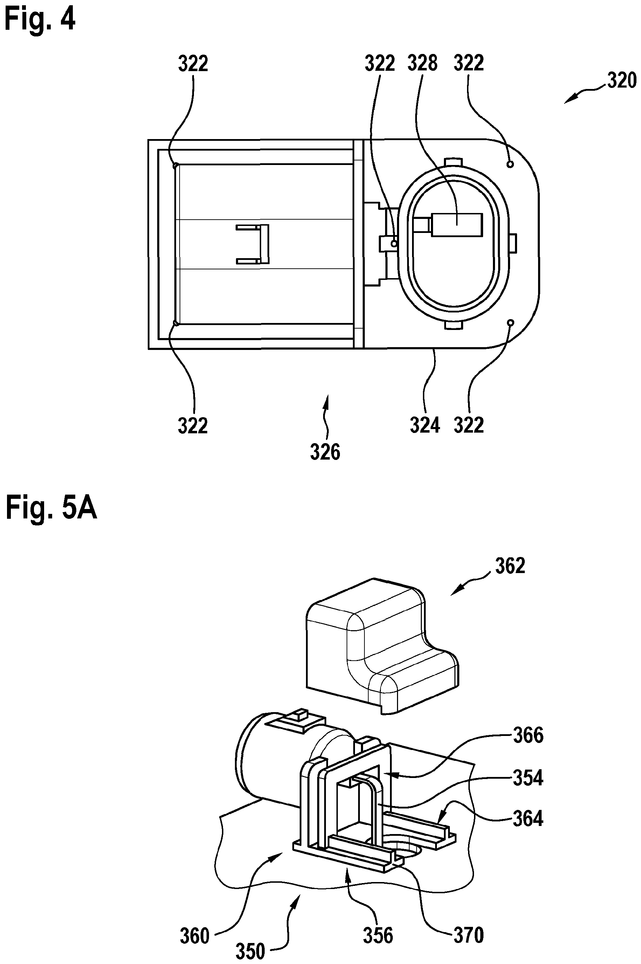

Fig. 4 illustrates another embodiment of a connector 320 according to the present disclosure. Connector 320 may be similar to connector 100 except for the following additional features.

Openings, holes or apertures 322 are provided at socket 324. According to one example, in a process of mounting the connector 320 to a PV panel, a housing 326 of connector 300 is oriented on a PVL back sheet, and subsequently an electrical connection of a tab 328 to a contact point of the PVL is accomplished. Only afterwards the socket 324 is fastened at the PV panel, which includes that glue is applied via the small openings 322 in the socket 324. For example, the glue may be injected via one or more of the openings 322. For example, one or more of the openings 322 can allow access to one or more gluing grooves of the socket 324 and/or the PV panel.

Additionally or alternatively, one or more of the openings 322 can be provided for inspection purposes, e.g., for inspecting a positioning of the socket 324 prior to the gluing, a fastening state thereafter, an aging of the fastening, etc.

Additionally or alternatively, glue can be applied to glue grooves on the bottom side of the connector, e.g. socket 324. When the connector 320 is pressed on a PV label, holes 322 allow excess glue to exit. In this simple yet efficient way, application of too much glue can be avoided and/or an indication that enough glue is used can be obtained.

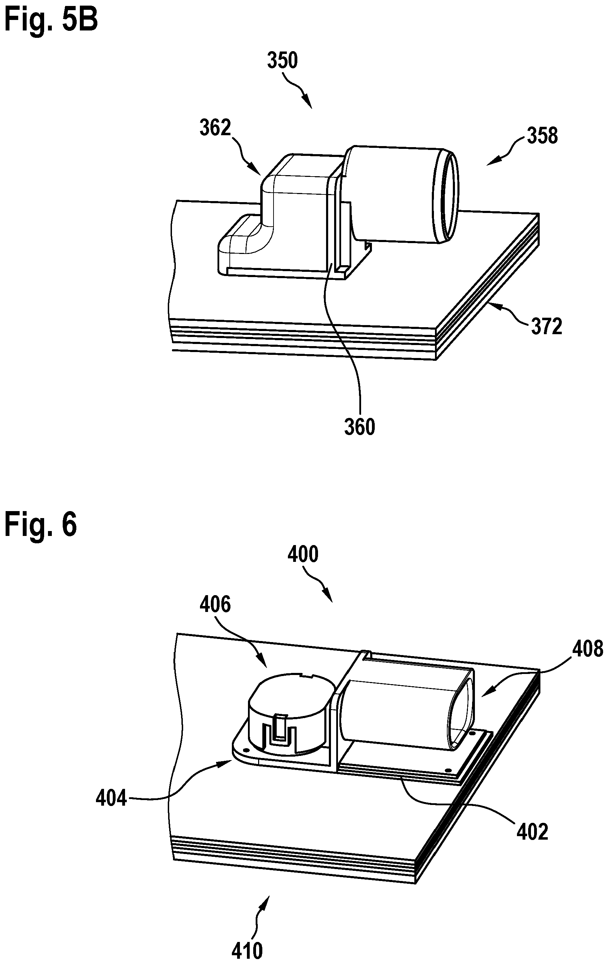

Figs. 5A and 5B illustrate another embodiment of a connector 350 according to the present disclosure. Connector 350 may be similar to connector 100 except as described in the following. Connector 350 comprises housing 352 and conductor 354. Housing 352 comprises contact part 356, connection part 358, joining portion 360, and protection cover 362.

Contact part 356 comprises reception protrusion 364 and additionally a yoke 366 for guiding, receiving and/or fixing cover 362. Conductor 354 may be pre-assembled with connection part 358 but is exposed in its extension from connection part 358 towards through-hole 368 provided in socket 370 of contact part 356. Conductor 354 is "integrated" within housing 352 by means of being accepted within housing 352 when cover 362 is attached to yoke 366 and protrusion 364.

Connection part 358 is illustrated as being configured for connecting to a different standard automotive connector than connection part 112 of connector 100, and this illustrates that the connection part of connectors as proposed herein can readily be adapted to comply with different standard automotive connectors. Similarly, the contact part of connectors as proposed herein can readily be adapted to different mounting conditions on PV panels, and according to circumstances such adaptions of connection part / contact part can be considered independent of each other.

PV car body panels may generally have a three-dimensional, 3D, curved contour or shape. Embodiments of connectors or connecting boxes as described herein may preferably be prepared for being assembled on such 3D-curved surfaces, and in view thereof the size of the contact part as intended for being in contact with the contact area of the PV panel, i.e., the footprint of the contact part, may be as small as possible to avoid gaps between the contact part and the back surface of the PV panel.

A socket with a small footprint may be implemented, for example, by the connector 100 of Figs. 1B and 2, wherein base plate 123 extends only "below" (with respect to axis 118) contact part 106. Similar configurations are illustrated in Figs. 3A, 3B and 5A, 5B. In contrast, Fig. 6 illustrates an embodiment of a connector 400 which may be similar to connector 100 in Fig. 1A, except that a base plate 402 has a larger footprint, namely base plate 402 extends not only "below" contact part 406, but extends further "below" connection part 408. It is to be noted that there is no mechanical link between connection part 408, i.e. there is a distance, clearance or space between connection part 408 and base plate 402, such that connection part 408 is only supported by its mechanical link to contact part 406, and connection part 408 is spaced apart from PV panel 410 / base plate 402.

The extended base plate 402 having a relatively large footprint may provide for improved fastening, by gluing or otherwise, of connector 400 to PV panel 410. It is to be noted that the large footprint may possibly be in conflict with a curved surface of PV car body panel. However, according to various embodiments, relatively small gaps between contact part, more specifically a socket or base plate thereof, and back surface or backsheet of PV panel or label can be compensated by glue. For other embodiments it is contemplated that the base plate can be adapted to comply with the curvature of the PV body panel. For example, a connector having a base plate with proper size and curvature may be applicable for a reasonable number of body panels of a car or other application. More specifically a, preferably small, number of connectors having accordingly adapted base plates with regard to footprint and/or curvature can be provided for any particular car or series of cars or other applications. Additionally or alternatively, a base plate having one or more predetermined breaking points or lines can be contemplated wherein the breaking lines allow easy adaption of the base plate in terms of footprint and/or curvature to PV panels of different curvatures.

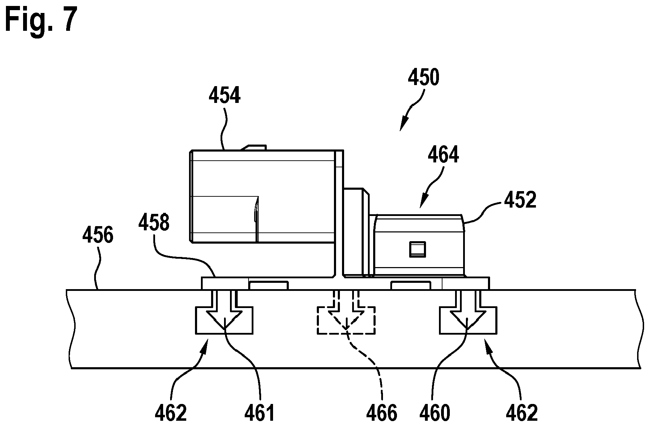

Fig. 7 illustrates another embodiment of a connector 450 with connection part 452 offset or shifted relative to contact part 454 to be spaced apart from PV label (or panel) 456. Base plate 458 extending below contact part 454 and connection part 452 comprises clips 460, 461 configured for being inserted into, more generally being accepted in, blind holes 462 of PV label 456, e.g., a backsheet thereof, wherein insertion is preferably by pushing or pressing. As an example, clips 460, 461 can be molded parts, for example can be molded in one piece with the connector 450 or parts thereof, e.g., the base plate 458, or can be molded to the base plate 458.

A clipping, clicking, snapping or locking mechanism such as that illustrated in Fig. 7 can be the only measure to fasten or fix the connector 450 on or onto PV label 456 or can be combined with one or more further measures. For example, the clipping can be intended as a pre-fixing and can be followed / complemented by gluing, thermal fusion of base plate 458 and PV label 456, etc. Additionally or alternatively, for example, the clips 460, 461 can be glued into holes 462. The holes 462 can be blind holes, or can be through-holes, for example for a provisioning of glue, inspection, etc., as described elsewhere herein. The holes 462 may only extend within a backsheet of the PV label 456 or may extend further into a copper layer or even front layers thereof.

Instead of one or more of clips 460, 461 configured for clipping in or being clipped in corresponding holes 462, pins or stubs can be considered for fixation into according holes provided in the PV label by form-fitting, gluing, combinations thereof, etc. According to still other embodiments, the PV label can comprise one or more clips and/or pins for fitting into corresponding holes of (a base plate of) the connector. Combinations thereof can also be contemplated, where each of the connector and the PV label comprises one or more clips or pins with complementary insertion holes on the PV label and connector, respectively.

As described in more detail for other embodiments herein, a sealing of a (preferably soldered or welded) contact point of the PV label 456 and a tab of the connector 450 can comprise potting, e.g., by providing a potting material in through-hole 464 of contact part 452. Additionally or alternatively, a sealing can be contemplated between base plate 458 and back-sheet or -side of PV label 456 such as by gluing, provisioning of sealing rims, lips, gluing nuts or notches, etc.

While the connector 450 in Fig. 7 comprises an "extended" base plate 458 having pins 460, 461 provided at corners of base plate 458, further clips can be provided along the edge and/or other locations of base plate 458, as exemplarily indicated by clip 466 (in dashed lines) in Fig. 7. According to further exemplary embodiments, a base plate having a smaller footprint may be preferred, for example for use with a curved surface PV car body panel. Such smaller base plate may extend only below contact part 452 but may nevertheless comprise multiple clips 466, 460 for insertion into corresponding holes of the PV label and fixation of the connector to the PV label / body panel.

According to some further embodiments, a printed circuit board, PCB, can be provided at the PV panel, specifically the contact area for making contact with the contact part of a connector. More specifically, the PCB can serve to provide the contact point or contact points for the tab or tabs, for example, two tabs, of the connector. The PCB can be laminated in the PV Module. For example, the PCB can be connected to a copper sheet of a PV module.

Still other embodiments relate to a connector wherein contact part and connection part are provided as separate pieces. According to some of these embodiments, the connection part forms within itself an angle in a range between, for example, 90° and 120° such that, when the connection part is put over or pushed or pressed into the contact part from top, a mating connector of a car wiring extends accordingly essentially in parallel to a PV panel surface. At least one tab and optionally compliant pins can be properly welded or soldered to, for example, a PCB of the PV panel serving as a contact point. The contact part can be glued or welded to the PV panel to cover mechanical loads. Additionally or alternatively, the connection part can be pressed onto the compliant pins to cover mechanical loads. The assembly of contact part and connection part can comprise a sealing therebetween.

According to a modified embodiment, a connector comprising contact part and connection part as one or two pieces is provided for an angled standard automotive connector to be put on or pushed into the connection part from top.

According to alternative embodiments, a single piece connector comprises an integrated PCB for orientation in parallel to a contact area of a PV panel surface. The connector forms a connection part in parallel to the PV panel, and a contact part at an angle thereto towards the PV panel. At least one tab for electrical connection and compliant pins for mechanical connection are properly welded or soldered to the contact point at the PV panel, e.g., a further PCB integrated therewithin. The connector is pressed onto the compliant pins to cover the mechanical loads. A pre-loading may be provided for gluing. After curing the glue will take over the mechanical loads and a sealing function.

Various embodiments described herein relate to PV body panels which may be obtained, for example, by over-moulding a PV label, PVL, using techniques proposed by the applicant in other disclosures. An electrical connection is to be established between the PVL and a wiring harness. Automotive manufacturing processes typically require a pluggable connection, e.g., for optimized cycle times in a production line. The wiring harness offers a pre-assembled standard connector for mating. The female or male connector or plug needs to mate with a male or female socket on the PV body panel side.

According to various embodiments, this socket, header, or connector comprises a housing, and at least one tab as an electrical element. The connector must be mechanically rigidly attached to a PV body panel, for example, a backside thereof. According to one scenario, the connector's functions include to electrically connect, seal and protect a blank copper contact point on the PV body panel backside.

The connector can, for example, be glued on a PVL back-sheet. The at least one tab can be directly soldered onto a copper sheet or other structure serving to provide an electrically conductive contact point. A protection cap provides for easy access to the contact point. No additional contacts are required.

More generally, the mounting of the connector to the PV panel can comprise one or more of the following: A mechanical connection of the connector to the PV panel back sheet can be achieved by gluing, ultrasonic welding, clipping etc. An electrical connection between the at least one tab and, for example, a copper sheet of the PV panel can be achieved via soldering (any type of soldering) or welding. A protection of the electrical connection against water (high pressure, splash water, etc.) and/or any kind of humidity can be achieved additionally with potting material to avoid aging caused from the humidity after closing the connector housing with the protection cover.

Various embodiments described and discussed herein offer one or more of the following advantages. Various embodiments of the connector allow for an optimized packaging. A number of parts required for mounting is minimized. Less parts for the assembly imply shorter cycle times. Additionally or alternatively, less packaging space is needed. As a more specific example, if the connector is designed to mate with a standard (off the shelf) automotive connector, costs can be minimized in automotive manufacturing processes. If the at least one tab is integrated into the housing, the package may include only the connector, optionally a protection cover, optionally with pre-assembled sealing, and/or potting material. For example, the at least one tab can be over-moulded with the housing to have a robust single-piece solution. No further connection box or boxes, cable or cables are required.

Various embodiments of a connector as proposed herein can be particularly resistant to vibrations, for example in comparison to screwing solutions. It is to be noted that embodiments of the connector can be of low weight or mass, and this also can add to resistance against vibrations.

According to various embodiments, no pre-assembled tabs are needed at the PV panel. For example, it may be sufficient to prepare a plain copper contact point, and this also adds to simple processes, short cycle times and minimized costs. Various embodiments of the connector may fit into a honeycomb structure of the PV panel.

According to various embodiments, the number of electrical connections is minimized resulting amongst others in minimized potential failures.

Various embodiments as discussed herein provide options for a robust attachment as needed. Due to adaptability to various requirements, the overall costs can be minimized.

Finally, it should be noted that the term "comprising" does not exclude other elements or steps and the "a" or "an" does not exclude a plurality. Also elements described in association with different embodiments may be combined.

### LIST OF REFERENCE SIGNS

- 100: connector
- 102: housing
- 104: conductor
- 106: contact part
- 108: contact area
- 110: PV car body panel
- 112: connection part
- 114: automotive connector
- 116: angle
- 118: main axis of contact part
- 120: main axis of connection part
- 122: socket
- 123: baseplate
- 124: joining portion
- 126: distance between connection part and PV panel
- 128: glue
- 130: back-sheet
- 132: PV label
- 134: tab
- 136: contact point
- 138: copper sheet
- 140: through-hole
- 142: protection cap
- 144: protrusion
- 146: Sealing
- 200: connector
- 202: contact part
- 204: socket
- 206: pins
- 208: poka-yoke hole
- 210: PV contact area
- 300: connector
- 302: PV panel
- 304: contact part
- 306: frame
- 320: connector
- 322: openings
- 324: socket
- 326: housing
- 328: tab
- 350: connector
- 352: housing
- 354: conductor
- 356: contact part
- 358: connection part
- 360: joining portion
- 362: protection cover
- 364: protrusion
- 366: yoke
- 368: through-hole
- 370: socket
- 372: PV panel
- 400: connector
- 402: base plate
- 404: socket
- 406: contact part
- 408: connection part
- 410: PV panel
- 450: connector
- 452: contact part
- 454: connection part
- 456: PV panel
- 458: base plate
- 460, 461: clips
- 462: blind holes
- 464: through-hole
- 466: clip

## Claims

1. A connector (100) for electrically connecting a photovoltaic, PV, panel (110) and a wiring (114) in a vehicle, wherein
the connector (100) comprises a housing (102) and a conductor (104),
the housing (102) comprises a contact part (106) and a connection part (112),
the contact part (106) is configured for contacting a contact area (108) at the PV panel (110),
the connection part (112) is configured for connecting to a connector (114) of the wiring,
the contact part (106) and the connection part (112) are arranged at an angle (116),
the connection part (112) is configured for being oriented essentially in parallel to the PV panel (110),
the conductor (104) is configured for providing an electrical connection via contact part (106) and connection part (112), and
the conductor (104) comprises at least one tab (134) configured for being connected, in particular by soldering or welding, to an electrical contact point (136) at the contact area (108) of the PV panel (110).

2. The connector according to claim 1,
wherein the angle (116) is less than 135°, preferably less than 120°.

3. The connector according to claim 1 or 2,
wherein the contact part (106) and the connection part (112) are laterally offset.

4. The connector according to any one of the preceding claims,
wherein the connection part (112) is configured to be spaced apart from the PV panel (110).

5. The connector according to any one of the preceding claims,
wherein the contact part (106) comprises a fastening portion (122) for fastening the connector (100) to the PV panel (110) by one or more of gluing, ultrasonic welding, molding, clipping.

6. The connector according to claim 5,
wherein the fastening portion (458) comprises one or more clips (460, 461, 466) configured for clipping the connector (450) to the PV panel (456).

7. The connector according to any one of the preceding claims,
wherein the at least one tab (134) is configured for being soldered or welded directly to the contact point (136) which is provided by a photovoltaic label (132) of the PV panel (110).

8. The connector according to any one of the preceding claims,
wherein the contact part (106) further comprises a through-hole (140) configured to enable soldering or welding the at least one metal tab (134) to the electrical contact point (136) of the PV panel (110).

9. The connector according to claim 8,
wherein the connector (100) further comprises a closure (142) for closing the though-hole (140) of the contact part (106).

10. The connector according to any one of the preceding claims,
wherein the contact part (200) comprises one or more positioning portions (206) for positioning on the PV panel (210).

11. The connector according to any one of the preceding claims,
wherein the housing (102) comprises a material able to thermally fuse with material of the PV panel (110).

12. A photovoltaic, PV, panel (110), equipped with a connector (100) according to any one of the preceding claims.

13. The PV panel according to claim 12,
wherein the PV panel has a curved surface.

14. The PV panel according to claim 12 or 13,
wherein a printed circuit board, PCB, in the PV panel provides a contact point for the at least one tab of the connector.

15. The PV panel according to any one of claims 12 to 14,
wherein the PV panel comprises one or more positioning portions for positioning the contact part.
